# FASCICULE DE BREVET EUROPEEN

(11) **EP 0 770 114 B1**
(45) Date de publication et mention de la délivrance du brevet: **11.11.1998**
(21) Numéro de dépôt: 95924982.2
(22) Date de dépôt: 06.07.1995
(51) Int. Cl.: C09K 5/04

(54) **REFRIGERANTS**
KÄLTEMITTEL
COOLANTS

(30) Priorité: 11.07.1994 BE 9400646; 30.03.1995 BE 9500284; 30.03.1995 DE 19511444
(43) Date de publication de la demande: 02.05.1997
(73) Titulaire: SOLVAY (Société Anonyme), B-1050 Bruxelles (BE); Solvay Fluor und Derivate GmbH, D-30173 Hannover (DE)
(72) Inventeur: D'AUBAREDE, Bruno, F-78000 Versailles (FR); BALTHASART, Dominique, B-1120 Bruxelles (BE); PAULUS, Mireille, B-1020 Bruxelles (BE); BARTHELEMY, Pierre, B-1315 Pietrebais (BE); KOENIG, Holger, D-31535 Neustadt (DE); LECROC, Dominique, F-39100 Dole (FR); VOGEL, Jean-Pierre, F-39500 Tavaux (FR); BUCHWALD, Hans, D-30952 Ronnenberg (DE); DOERING, Reinhold, D-48565 Steinfurt (DE); HELLMANN, Joachim, D-30171 Hannovre (DE)
(74) Mandataire: Jacques, Philippe
(86) Numéro de dépôt international: EP9502635
(87) Numéro de publication internationale: WO9601882

(56) Documents cités:
- EP-A- 0 498 152
- EP-A- 0 558 823

## Description

La présente invention se rapporte à des réfrigérants, à des compositions réfrigérantes contenant ces réfrigérants et à l'utilisation de ces réfrigérants dans des équipements de transfert de chaleur, en particulier dans des systèmes de réfrigération mécanique.

L'invention concerne en particulier des réfrigérants dits de type "moyenne et basse température", c'est-à-dire des réfrigérants permettant d'atteindre des températures comprises entre environ - 25 °C et - 50 °C, utilisables dans tous les domaines de la réfrigération à moyenne et basse température, tels que notamment en réfrigération commerciale, transport frigorifique, climatisation et divers procédés industriels, ainsi que des réfrigérants dits de type "très basse température", c'est-à-dire des réfrigérants permettant d'atteindre des températures comprises entre environ - 50 °C et - 100 °C.

Dans les systèmes de réfrigération mécaniques, l'évaporation d'un réfrigérant liquide à basse pression provoque l'élimination de la chaleur du milieu environnant l'évaporateur. Le gaz résultant de l'évaporation est ensuite comprimé et envoyé à un condenseur où il se condense en restituant la chaleur au milieu environnant le condenseur. Le condensat est enfin renvoyé à l'évaporateur par une vanne de détente. De tels systèmes sont décrits dans Ullmann's Encyclopedia of Industrial Chemistry, 5th Ed., 1988, vol. B3, chapitre 19, pages 1 à 20.

Le chlorodifluorométhane (R-22) ou l'azéotrope du R-22 avec le chloropentafluoroéthane (R-115), dénommé R-502, sont classiquement utilisés dans les systèmes de réfrigération mécaniques de type "moyenne et basse température". Le chlorotrifluorométhane (R-13), le bromotrifluorométhane (R-13B1) ou l'azéotrope du R-13 avec le trifluorométhane (R-23), dénommé R-503, sont classiquement utilisés dans les systèmes de réfrigération mécaniques "très basse température". Depuis quelques années, les chlorofluorocarbures, tels le R-13 et le R-115, les bromofluorocarbures, tel le R-13B1, et les hydrochlorofluorocarbures, tel le R-22, sont suspectés d'effets néfastes sur la couche d'ozone stratosphérique. Différents accords internationaux prévoient la réduction progressive, voire l'arrêt complet, de leur fabrication et de leurs utilisations. Outre l'éventualité de la destruction de l'ozone, il a été suggéré que des concentrations significatives de réfrigérants halogénés dans l'atmosphère pourraient contribuer au phénomène de réchauffement de l'atmosphère (phénomène connu sous le nom d'effet de serre). Il est dès lors souhaitable de remplacer les réfrigérants existants par des réfrigérants de substitution, qui ne contiennent pas de chlore, présentant de la sorte un potentiel de destruction de l'ozone (ODP) nul, et qui ont de préférence une durée de vie dans l'atmosphère relativement courte, présentant de la sorte un potentiel de réchauffement global (HGWP) faible.

En plus de présenter un impact minimal sur l'environnement, un réfrigérant de substitution doit de préférence être non toxique, ininflammable, chimiquement stable et non-corrosif. En outre, il doit présenter des propriétés physiques et thermodynamiques appropriées, permettant idéalement d'obtenir une efficacité, une capacité frigorifique, une température de refoulement à la sortie du compresseur et un rapport de compression similaires à ceux du réfrigérant qu'il remplace, ainsi que, si possible, une pression dans l'évaporateur supérieure à la pression atmosphérique, afin d'éviter toute entrée d'humidité dans le système de réfrigération.

Certains réfrigérants inoffensifs pour la couche d'ozone stratosphérique ont déjà été proposés pour remplacer le R-22 ou le R-502. Notamment, dans le brevet US-A-5,035,823, on a proposé un réfrigérant constitué de 1,1,1-trifluoroéthane (R-143a) et de 1,1,1,2-tétrafluoroéthane (R-134a); dans la demande de brevet WO 93/09199, on a proposé un réfrigérant constitué de difluorométhane (R-32) et de R-134a; dans la demande de brevet WO 92/16597, on a proposé un réfrigérant constitué de trifluorométhane (R-23), de R-32 et de R-134a; et dans le brevet US 5,211,867, on a proposé un réfrigérant constitué de 1,1,1-trifluoroéthane (R-143a) et de pentafluoroéthane (R-125). Ces réfrigérants présentent toutefois certains inconvénients, dont une capacité frigorifique généralement inférieure à celle du R-22 et/ou un HGWP relativement important.

La présente invention vise à fournir des réfrigérants n'ayant pas ou peu d'action sur l'environnement et qui présentent des propriétés thermodynamiques proches de celles du R-22 ou du R-502, permettant leur utilisation dans les installations existantes de réfrigération à moyenne et basse température.

La présente invention vise également à fournir des réfrigérants n'ayant pas ou peu d'action sur l'environnement et qui présentent des propriétés thermodynamiques proches de celles du R-13, du R-13B1 ou du R-503, permettant leur utilisation dans les installations existantes de réfrigération à très basse température.

A cet effet, la présente invention concerne des réfrigérants qui sont constitués de 1,1-difluoroéthylène (VF2) et d'au moins un hydrofluoroalcane de formule CₐH_{b}F_{c}, avec a un nombre entier égal à 1 ou 2, b un nombre entier de 1 à 4 et c un nombre entier de 2 à 5, la somme de b et c étant égale à 2a + 2.

De préférence, l'hydrofluoroalcane des réfrigérants selon l'invention est sélectionné parmi le trifluorométhane (R-23), le difluorométhane (R-32), le 1,1-difluoroéthane (R-152a), le 1,1,1-trifluoroéthane (R-143a), le 1,1,1,2-tétrafluoroéthane (R-134a), le pentafluoroéthane (R-125) et leurs mélanges.

Les réfrigérants selon l'invention peuvent contenir de 0,1 à 99,9 % en poids de VF2 et de 99,9 à 0,1 % en poids d'hydrofluoroalcane(s). Habituellement, ils contiennent au moins 1 % en poids de VF2. Généralement, ils en contiennent au moins 1,5 % en poids. De préférence, ils en contiennent au moins 2 % en poids. Les réfrigérants selon l'invention contiennent habituellement au plus 99 % en poids de VF2. Généralement, ils en contiennent au plus 90 % en poids. De préférence, ils en contiennent au plus 80 % en poids. De manière particulièrement préférée, ils en contiennent au plus 70 % en poids.

Par une sélection appropriée de l'hydrofluoroalcane et des proportions de leurs constituants, les réfrigérants selon l'invention peuvent convenir pour une utilisation dans des installations du type à moyenne et basse température ou dans des installations du type à très basse température, telles que définies plus haut.

Les réfrigérants selon l'invention adaptés à une utilisation dans les installations existantes de réfrigération à moyenne et basse température, ci-après dénommés réfrigérants de type moyenne et basse température, contiennent de préférence au moins un hydrofluoroalcane sélectionné parmi le difluorométhane (R-32), le 1,1-difluoroéthane (R-152a). le 1,1,1-trifluoroéthane (R-143a), le 1,1,1,2-tétrafluoroéthane (R-134a) et le pentafluoroéthane (R-125).

Les réfrigérants selon l'invention de type moyenne et basse température contiennent habituellement au moins 1 % en poids de VF2. Généralement, ils en contiennent au moins 1,5 % en poids. De préférence, ils en contiennent au moins 2 % en poids. Les réfrigérants selon l'invention de type moyenne et basse température contiennent habituellement au plus 40 % en poids de VF2. Généralement, ils en contiennent au plus 35 % en poids. De préférence, ils en contiennent au plus 30 % en poids. De manière particulièrement préférée, ils en contiennent au plus 25 % en poids.

Des réfrigérants selon l'invention de type moyenne et basse température ayant donné de bons résultats sont essentiellement constitués de 65 à 99 % en poids d'hydrofluoroalcane(s) et de 1 à 35 % en poids de VF2. Le plus souvent, ils sont essentiellement constitués de 70 à 98 % en poids d'hydrofluoroalcane(s) et de 2 à 30 % en poids de VF2. De préférence, ces réfrigérants de type moyenne et basse température sont constitués essentiellement de 75 à 97,5 % en poids d'hydrofluoroalcane(s) et de 2,5 à 25 % en poids de VF2. Les réfrigérants de type moyenne et basse température tout particulièrement préférés sont constitués essentiellement de 80 à 97,5 % en poids d'hydrofluoroalcane(s) et 2,5 à 20 % en poids de VF2.

Dans un premier mode de réalisation des réfrigérants de type moyenne et basse température de l'invention, qui est préféré, les réfrigérants de type moyenne et basse température sont essentiellement constitués
(a) de 1,1-difluoroéthylène (VF2);
(b) de 1,1,1,2-tétrafluoroéthane (R-134a) et/ou de pentafluoroéthane (R-125); et, éventuellement,
(c) de difluorométhane (R-32), de 1,1,1-trifluoroéthane (R-143a) et/ou de 1,1-difluoroéthane (R-152a).

Parmi ceux-ci, les réfrigérants contenant du R-134a sont particulièrement préférés. Les réfrigérants de type moyenne et basse température ternaires VF2/R-134a/R-32 sont tout particulièrement préférés.

Outre du VF2 dans les quantités données plus haut, les réfrigérants du premier mode de réalisation des réfrigérants de type moyenne et basse température de l'invention contiennent généralement au moins 15 % en poids de R-134a et/ou de R-125. De préférence, ils en comprennent au moins 20 % en poids. De manière particulièrement préférée, ils en contiennent au moins 25 % en poids. Les réfrigérants du premier mode de réalisation des réfrigérants de type moyenne et basse température de l'invention comprennent habituellement au plus 99 % en poids de R-134a et/ou de R-125. Généralement, ils en comprennent au plus 98,5 % en poids. De préférence, ils en comprennent au plus 98 % en poids. Avantageusement, les réfrigérants du premier mode de réalisation des réfrigérants de type moyenne et basse température de l'invention contiennent du R-134a et/ou du R-125 en quantité telle que les réfrigérants sont ininflammables.

Les réfrigérants du premier mode de réalisation des réfrigérants de type moyenne et basse température de l'invention peuvent en outre contenir du R-32, du R-143a et/ou du R-152a. Habituellement, ils en contiennent au plus 80 % en poids. Généralement, ils en comprennent au plus 75 % en poids. De préférence, ils en comprennent au plus 70 % en poids.

Dans un deuxième mode de réalisation des réfrigérants de type moyenne et basse température de l'invention, les réfrigérants de type moyenne et basse température sont essentiellement constitués
(a) de 1,1-difluoroéthylène (VF2);
(b) de 1,1-difluoroéthane (R-152a); et
(c) de difluorométhane (R-32) et/ou de 1,1,1-trifluoroéthane (R-143a).

Outre du VF2 dans les quantités données plus haut, les réfrigérants du deuxième mode de réalisation des réfrigérants de type moyenne et basse température de l'invention contiennent généralement au moins 35 % en poids de R-152a. De préférence, ils en comprennent au moins 40 % en poids. De manière particulièrement préférée, ils en contiennent au moins 50 % en poids. Les réfrigérants du deuxième mode de réalisation des réfrigérants de type moyenne et basse température de l'invention comprennent habituellement au plus 85 % en poids de R-152a. Généralement, ils en comprennent au plus 80 % en poids. De préférence, ils en comprennent au plus 75 % en poids. Le solde des réfrigérants du deuxième mode de réalisation des réfrigérants de type moyenne et basse température de l'invention est constitué de R-32 et/ou de R-143a.

Les réfrigérants selon l'invention de type moyenne et basse température trouvent une application dans les techniques de production de froid ou de chaleur, telles que les machines frigorifiques et les pompes à chaleur du type à compression. Ils peuvent en particulier remplacer le R-22 ou le R-502 dans leurs applications habituelles. Les réfrigérants selon l'invention de type moyenne et basse température sont tout particulièrement adaptés pour les applications utilisant actuellement le R-22. Les conditions d'utilisation des réfrigérants selon l'invention de type moyenne et basse température sont similaires à celles du R-22 ou du R-502, ce qui permet leur mise en oeuvre dans des compresseurs utilisant actuellement le R-22 ou le R-502, pratiquement sans modifications.

Toutes autres choses étant égales, la présence de VF2 dans les réfrigérants selon l'invention de type moyenne et basse température provoque, dans les conditions d'utilisation du R-22, une augmentation de la capacité frigorifique et de la pression dans l'évaporateur. En outre, en raison du très faible HGWP du VF2 (environ 0,0004), sa présence dans les réfrigérants selon l'invention leur confère un faible HGWP.

Par ailleurs, l'utilisation des réfrigérants selon l'invention de type moyenne et basse température conduit à une température en fin de compression inférieure à celle obtenue avec le R-22.

Les réfrigérants selon l'invention adaptés à une utilisation dans les installations existantes de réfrigération à très basse température, ci-après dénommés réfrigérants de type très basse température, contiennent de préférence au moins un hydrofluoroalcane sélectionné parmi le trifluorométhane (R-23), le difluorométhane (R-32), le 1,1,1-trifluoroéthane (R-143a) et le pentafluoroéthane (R-125). Des réfrigérants de type très basse température particulièrement préférés contiennent au moins un hydrofluoroalcane choisi parmi le trifluorométhane (R-23), le difluorométhane (R-32) et le pentafluoroéthane (R-125).

Les réfrigérants selon l'invention de type très basse température contiennent habituellement au moins 1 % en poids de VF2. Généralement, ils en contiennent au moins 5 % en poids. De préférence, ils en contiennent au moins 10 % en poids. Les réfrigérants selon l'invention de type très basse température contiennent habituellement au plus 99 % en poids de VF2. Généralement, ils en contiennent au plus 90 % en poids. De préférence, ils en contiennent au plus 80 % en poids. De manière particulièrement préférée, ils en contiennent au plus 70 % en poids.

Des réfrigérants selon l'invention de type très basse température ayant donné de bons résultats sont essentiellement constitués de 10 à 95 % en poids d'hydrofluoroalcane(s) et de 5 à 90 % en poids de VF2. Le plus souvent, ils sont essentiellement constitués de 20 à 90 % en poids d'hydrofluoroalcane(s) et de 10 à 80 % en poids de VF2. Des réfrigérants de type très basse température tout particulièrement préférés sont essentiellement constitués de 30 à 75 % en poids d'hydrofluoroalcane(s) et de 25 à 70 % en poids de VF2.

Dans un premier mode de réalisation des réfrigérants de type très basse température de l'invention, les réfrigérants de type très basse température sont essentiellement constitués
(a) de 1,1-difluoroéthylène (VF2); et
(b) de difluorométhane (R-32), de 1,1,1-trifluoroéthane (R-143a) et/ou de pentafluoroéthane (R-125).

Parmi ceux-ci, les réfrigérants contenant du R-32 et/ou du R-125 sont préférés. Les réfrigérants de type très basse température VF2/R-125 et VF2/R-32/R-125 sont particulièrement préférés.

Dans un deuxième mode de réalisation des réfrigérants de type très basse température de l'invention, qui est préféré, les réfrigérants de type très basse température sont essentiellement constitués
(a) de 1,1-difluoroéthylène (VF2);
(b) de trifluorométhane (R-23); et éventuellement,
(c) de difluorométhane (R-32), de 1,1,1-trifluoroéthane (R-143a) et/ou de pentafluoroéthane (R-125j.

Parmi ceux-ci, les réfrigérants binaires VF2/R-23 sont particulièrement préférés.

Outre du VF2 dans les quantités données plus haut, les réfrigérants du deuxième mode de réalisation des réfrigérants de type très basse température de l'invention contiennent généralement au moins 1 % en poids de R-23. De préférence, ils en comprennent au moins 5 % en poids. De manière particulièrement préférée, ils en contiennent au moins 10 % en poids. De manière tout particulièrement préférée, ils en contiennent au moins 20 % en poids. Les réfrigérants du deuxième mode de réalisation des réfrigérants de type très basse température de l'invention comprennent habituellement au plus 99 % en poids de R-23. Généralement, ils en comprennent au plus 95 % en poids. De préférence, ils en comprennent au plus 90 % en poids. De manière particulièrement préférée, ils en contiennent au plus 80 % en poids.

Les réfrigérants du deuxième mode de réalisation des réfrigérants de type très basse température de l'invention peuvent en outre contenir du R-32, du R-143a et/ou du R-125. Habituellement, ils en contiennent au plus 80 % en poids. Généralement, ils en comprennent au plus 70 % en poids. De préférence, ils en comprennent au plus 60 % en poids. De manière particulièrement préférée, ils en comprennent au plus 50 % en poids.

Parmi les réfrigérants du deuxième mode de réalisation des réfrigérants de type très basse température de l'invention, des réfrigérants tout particulièrement préférés sont ceux qui contiennent du VF2 et du R-23 en proportions dans lesquelles ils forment un azéotrope ou un pseudo-azéotrope.

Fondamentalement, l'état thermodynamique d'un fluide est défini par quatre variables interdépendantes : la pression (P), la température (T), la composition de la phase liquide (X) et la composition de la phase gazeuse (Y). Un azéotrope est un système particulier à au moins deux composants pour lequel, à une température donnée et à une pression donnée, X est égal à Y. Un pseudo-azéotrope est un système à au moins deux composants pour lequel, à une température donnée et à une pression donnée, X est substantiellement égal à Y. En pratique, un pseudo-azéotrope se comporte quasi comme un azéotrope vrai en ce qui concerne la tendance à ne pas se fractionner lors d'une ébullition ou d'une évaporation. Dès lors, sa composition reste substantiellement constante lors des changements de phase dans le cycle frigorifique et également en cas de fuite du réfrigérant hors du système de réfrigération. Aux fins de la présente invention, on entend par pseudo-azéotrope, un mélange d'au moins deux constituants dont le point d'ébullition, à une pression donnée, diffère du point d'ébullition de l'azéotrope de 3 °C au maximum, de préférence de 1 °C au maximum.

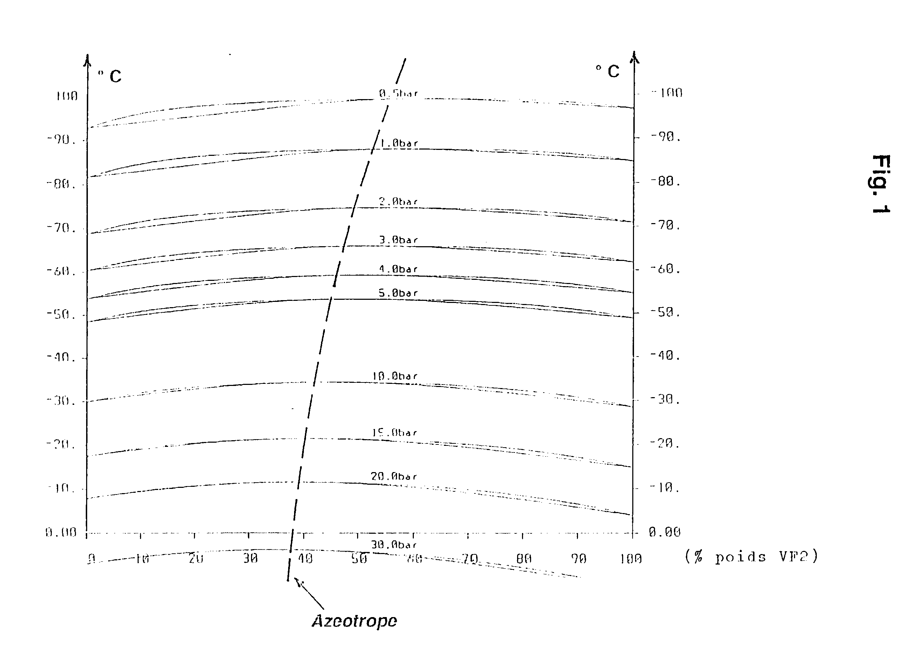

Les réfrigérants binaires VF2/R-23 contenant de 0,1 à 99,9 % en poids de VF2 et de 99,9 à 0,1 % en poids de R-23 sont des pseudo-azéotropes. Ceux contenant de 1 à 90 % en poids de VF2 et de 99 à 10 % en poids de R-23 sont préférés. Ceux contenant de 5 à 80 % en poids de VF2 et de 95 à 20 % en poids de R-23 sont particulièrement préférés. Ceux contenant de 10 à 70 % en poids de VF2 et de 90 à 30 % en poids de R-23 sont tout particulièrement préférés. Les réfrigérants pseudo-azéotropiques binaires VF2/R-23 les plus particulièrement préférés renferment environ de 35 à 60 % en poids de VF2 et de 65 à 40 % en poids de R-23. La composition azéotropique entre le VF2 et le R-23 varie au sein de cette plage préférée, en fonction de la pression (voir figure 1, ligne pointillée).

Les réfrigérants selon l'invention de type très basse température permettent d'atteindre des températures de - 50 °C à environ - 100 °C. Ils conviennent particulièrement bien pour atteindre des températures allant environ de - 50 à - 90 °C. Ils peuvent dès lors être utilisés comme réfrigérants dans des systèmes de réfrigération très basse température, notamment pour des réfrigérateurs très basse température, pour des chambres froides de congélation rapide de denrées alimentaires, pour des chambres froides de laboratoires scientifiques et pour de grandes installations de réfrigération industrielles, en remplacement notamment du R-13, du R-13B1 ou du R-503.

Les réfrigérants selon l'invention sont généralement mis en oeuvre dans des compositions réfrigérantes qui comprennent, en plus du réfrigérant, un ou plusieurs additifs utilisés classiquement dans les compositions réfrigérantes, tels que des stabilisants, des agents lubrifiants, dont la nature exacte dépend principalement de l'utilisation envisagée de la composition.

L'invention concerne dès lors également une composition réfrigérante comprenant un réfrigérant, conforme à l'invention, tel que défini plus haut, et au moins un additif.

Dans la composition réfrigérante selon l'invention, les additifs doivent être compatibles avec les constituants du réfrigérant. En particulier, ils doivent être chimiquement inertes vis-à-vis des constituants du réfrigérant aux températures normales d'utilisation de la composition selon l'invention. La nature des additifs et leur teneur dans la composition doivent par ailleurs être choisies de manière à ne pas affecter notablement la température de vaporisation du réfrigérant. En pratique, les additifs peuvent être sélectionnés parmi les lubrifiants, les stabilisants des hydrofluoroalcanes et du 1,1-difluoroéthylène, les inhibiteurs de polymérisation du VF2, et les inhibiteurs de corrosion. Leur teneur pondérale (somme de tous les additifs) n'excède généralement pas 50 % de la masse globale de la composition et de préférence pas 25 %. En pratique, des teneurs de 0,1 à 20 % en poids sont recommandées. La teneur en additifs est exprimée en % en poids de la masse totale de la composition réfrigérante. En variante, la composition réfrigérante peut comprendre un ou plusieurs composés réfrigérants différents des constituants des réfrigérants décrits ci-dessus, notamment du propane (R-290).

L'invention concerne également l'utilisation des réfrigérants et des compositions réfrigérantes selon l'invention dans tous les types d'équipement de transfert de chaleur par compression. Ils peuvent être utilisés pour produire du froid par une méthode impliquant la condensation du réfrigérant et ensuite son évaporation dans un échangeur de chaleur en contact avec un corps à refroidir. Ils peuvent aussi être utilisés pour produire de la chaleur par une méthode impliquant l'évaporation du réfrigérant et ensuite sa condensation dans un échangeur de chaleur en contact avec un corps à réchauffer.

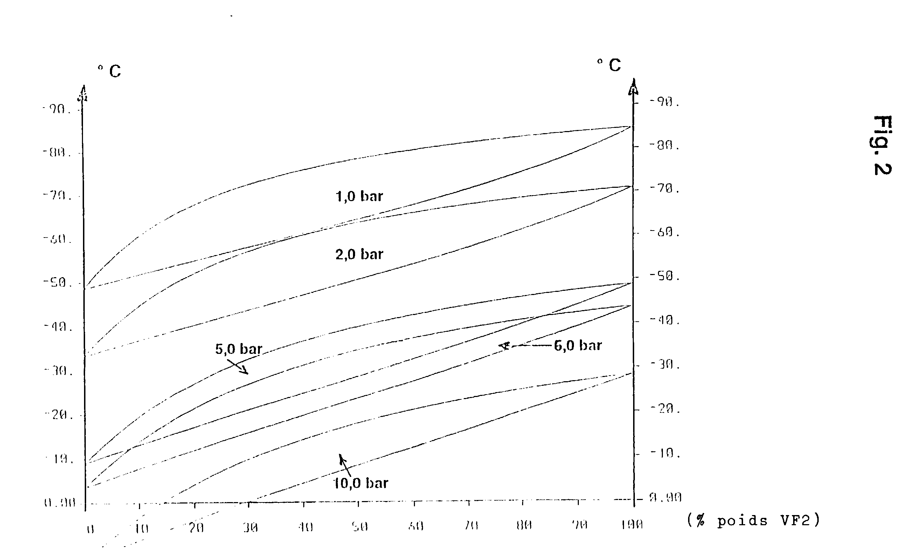

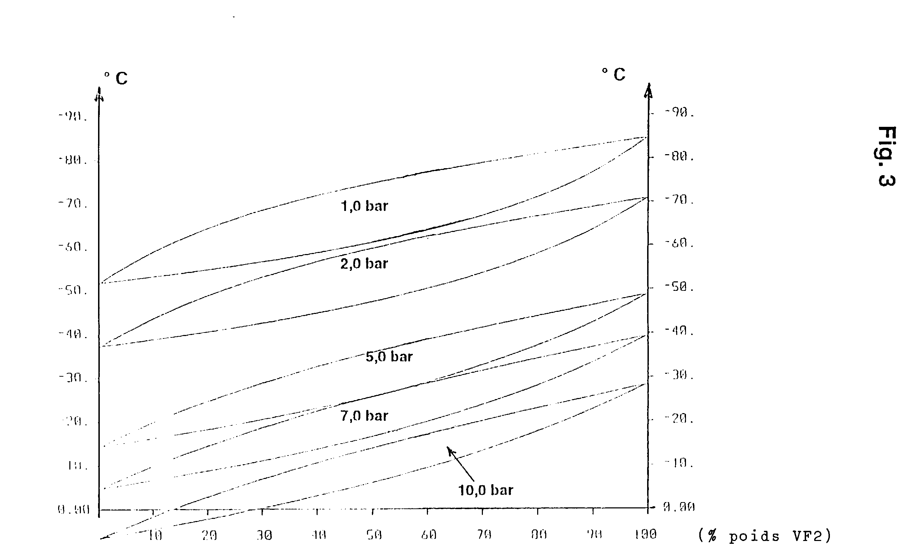

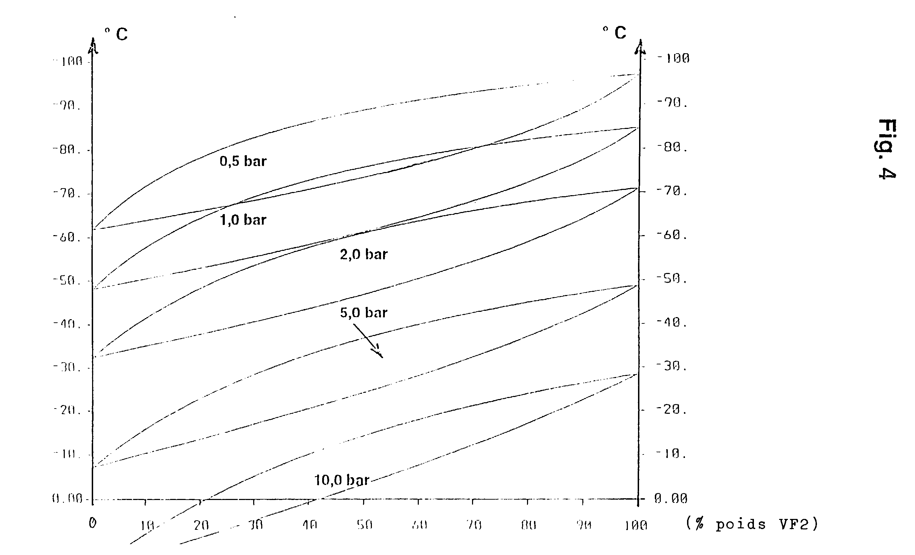

L'invention est illustrée par les figures 1 à 4 et par les exemples 1 à 5 suivants.

La figure 1 présente les courbes de température d'ébullition et de température de rosée des compositions binaires de VF2 et de R-23 à différentes pressions, en fonction du pourcentage pondéral de VF2 dans la composition. L'évolution de la composition azéotropique en fonction de la pression est donnée par la courbe en pointillés.

La figure 2 présente les courbes de température d'ébullition et de température de rosée des compositions binaires de VF2 et de R-125 à différentes pressions, en fonction du pourcentage pondéral de VF2 dans la composition.

La figure 3 présente les courbes de température d'ébullition et de température de rosée des compositions binaires de VF2 et de R-32 à différentes pressions, en fonction du pourcentage pondéral de VF2 dans la composition.

La figure 4 présente les courbes de température d'ébullition et de température de rosée des compositions binaires de VF2 et de R-143a à différentes pressions, en fonction du pourcentage pondéral de VF2 dans la composition.

### Exemple 1

A l'aide de l'équation d'état de Peng-Robinson, décrite dans Industrial Engineering Chem. Fund. 1976, (15), p. 59, une analyse des performances thermodynamiques de plusieurs réfrigérants selon l'invention de type moyenne et basse température a été réalisée. A titre de comparaision, on a réalisé cette même analyse pour le R-134a seul, pour le R-22 et pour différents mélanges réfrigérants connus, constitués d'hydrofluoroalcanes.

Les paramètres du cycle frigorifique sont caractéristiques de l'utilisation du R-22 comme fluide réfrigérant. Les paramètres choisis sont une température de début d'évaporation (T_{évap}) de - 30 °C, une température de fin de condensation (T_{cond})fixée à 30 °C, une surchauffe fixée à 10 K (différence de température de 10 °C), un sous-refroidissement fixé à 5 K (différence de température de 5 °C) et un rendement isentropique du compresseur fixé à 0.8.

Ont été estimés la température en fin de compression (Tₘₐₓ), la pression dans l'évaporateur (Pₑᵥ), le rapport de compression (R = pression au condenseur/pression à l'évaporateur), le coefficient de performance mécanique (COP) et le volume balayé au compresseur (Vol) nécessaire pour obtenir une puissance frigorifique de 10 kW.

La valeur de la température en fin de compression est utile pour juger de la faisabilité de l'utilisation du fluide réfrigérant, une température trop élevée pouvant provoquer la dégradation de l'huile et/ou du réfrigérant utilisés, ainsi que des matériaux de construction du système de réfrigération.

La pression d'évaporation doit de préférence être supérieure à la pression atmosphérique, pour éviter l'entrée d'humidité dans le système de réfrigération.

Le coefficient de performance mécanique est une mesure qui représente l'efficacité thermodynamique relative d'un réfrigérant dans un cycle frigorifique spécifique. Ce terme est le rapport de la puissance frigorifique utile à l'énergie mécanique consommée par le compresseur.

Le volume balayé au compresseur reflète la capacité frigorifique du réfrigérant. Plus le volume de réfrigérant nécessaire pour obtenir une puissance frigorifique donnée est faible, plus sa capacité volumétrique est élevée.

Les résultats sont rassemblés au tableau I.

Il ressort du tableau I que les conditions d'utilisation des réfrigérants selon l'invention de type moyenne et basse température apparaissent suffisamment proches de celles du R-22 pour permettre leur utilisation dans des compresseurs utilisant actuellement le R-22.

En particulier, les réfrigérants binaires VF2/R-134a constituent un bon compromis entre les différents critères de performance requis pour remplacer le R-22 ou le R-502 et les critères de respect de l'environnement. En effet, le R-134a et le 1,1-difluoroéthylène ne contiennent pas de chlore et ont donc un ODP égal à zéro. En outre, ces réfrigérants binaires ont un HGWP inférieur à celui du R-134a et très inférieur à celui des autres réfrigérants de l'art antérieur contenant du R-23, du R-143a ou du R-125. Alors que l'essai 2 démontre l'inconvénient d'utiliser du R-134a dans un cycle frigorifique fonctionnant avec une température de début d'évaporation de - 30 °C, en raison de sa trop faible tension de vapeur qui engendre une pression dans l'évaporateur inférieure à la pression atmosphérique, l'essai 3 montre qu'une teneur en VF2 de 5 % en poids suffit pour atteindre, dans les conditions examinées, une pression dans l'évaporateur supérieure à la pression atmosphérique. Par ailleurs, des quantités croissantes de VF2 permettent d'augmenter la capacité frigorifique, une capacité frigorifique identique à celle du R-22 étant atteinte lorsque la teneur en VF2 est de 20 % en poids (essais 4 et 5).

Par ailleurs, l'analyse du tableau I montre que, dans un cycle frigorifique donné, par rapport à des mélanges réfrigérants connus constitués de deux hydrofluoroalcanes, des réfrigérants ternaires selon l'invention de type moyenne et basse température, constitués de ces deux mêmes hydrofluoroalcanes et de VF2, génèrent une capacité frigorifique et une pression à l'évaporateur améliorées, sans affecter de manière notable les autres paramètres caractéristiques du cycle frigorifique.

En outre, la comparaison des essais 11 et 12 démontre qu'il est possible de remplacer le R-23 contenu dans des réfrigérants de type moyenne et basse température par du VF2, lequel présente un HGWP environ 10.000 fois inférieur à celui du R-23, tout en conservant des performances comparables en réfrigération.

**Tableau I**

| N° | Réfrigérant (%poids) | Tₘₐₓ °C | Pₑᵥ, bar | R | COP | Vol, m³/h |
|---|---|---|---|---|---|---|
| 1* | R22 | 92,6 | 1,63 | 7,5 | 2,56 | 31 |
| 2* | R134a | 62,7 | 0,84 | 9,1 | 2,56 | 56 |
| 3 | VF2/R134a (5/95) | 72,6 | 1,02 | 10,1 | 2,35 | 48 |
| 4 | VF2/R134a (10/90) | 79 | 1,2 | 10,4 | 2,23 | 41 |
| 5 | VF2/R134a (20/80) | 87 | 1,75 | 9,7 | 2,15 | 31 |
| 6 | VF2/R134a/R125 (2/67/31) | 64,7 | 1,23 | 8,8 | 2,41 | 42 |
| 7 | VF2/R134a/R125 (3,5/66,5/30) | 66,9 | 1,29 | 9,0 | 2,38 | 40 |
| 8 | VF2/R134a/R125 (4/71/25) | 68,2 | 1,26 | 9,2 | 2,36 | 41 |
| 9* | R134a/R32 (70/30) | 87,6 | 1,54 | 8,3 | 2,50 | 32 |
| 10* | R134a/R32 (75/25) | 84,4 | 1,43 | 8,5 | 2,50 | 34 |
| 11* | R23/R134a/R32 (2/67/31) | 90,3 | 1,65 | 8,3 | 2,48 | 30 |
| 12 | VF2/R134a/R32 (2/67/31) | 90,0 | 1,67 | 8,3 | 2,47 | 30 |
| 13 | VF2/R134a/R32 (3,5/66,5/30) | 90,6 | 1,72 | 8,3 | 2,45 | 29 |
| 14 | VF2/R134a/R32 (4/71/25) | 88,2 | 1,63 | 8,5 | 2,44 | 31 |
| 15* | R134a/R143a (70/30) | 64,9 | 1,20 | 8,3 | 2,51 | 42 |
| 16* | R134a/R143a (75/25) | 64,8 | 1,13 | 8,4 | 2,51 | 44 |
| 17 | VF2/R134a/R143a (2/67/31) | 67,7 | 1,30 | 8,4 | 2,45 | 40 |
| 18 | VF2/R134a/R143a (3,5/66,5/30) | 69,5 | 1,36 | 8,5 | 2,41 | 38 |
| 19 | VF2/R134a/R143a (4/71/25) | 70,4 | 1,31 | 8,7 | 2,40 | 39 |
| 20 | VF2/R134a/R290 (5/90/5) | 71,7 | 1,10 | 9,6 | 2,37 | 45 |
| 21 | VF2/R134a/R290 (5/80/15) | 70,2 | 1,23 | 8,7 | 2,41 | 42 |
| 22* | R125/R143a (50/50) | 55,2 | 2,16 | 6,8 | 2,33 | 29 |
| 23 | VF2/R125/R143a (2/50/48) | 56,6 | 2,25 | 6,8 | 2,30 | 28 |
| 24 | VF2/R125/R143a (5/47,5/47,5) | 58,8 | 2,40 | 6,8 | 2,27 | 26 |
| 25 | VF2/R125/R143a (5/50/45) | 58,5 | 2,41 | 6,8 | 2,27 | 26 |
| 26 | VF2/R125/R152a (2/31/67) | 77,0 | 1,09 | 8,7 | 2,51 | 44 |
| 27 | VF2/R125/R152a (3,5/30/66,5) | 78,6 | 1,13 | 8,8 | 2,48 | 43 |
| 28 | VF2/R125/R152a (4/25/71) | 80,2 | 1,10 | 8,9 | 2,49 | 44 |
| 29* | R152a/R143a (70/30) | 77,3 | 1,07 | 8,3 | 2,57 | 45 |
| 30* | R152a/R143a (75/25) | 77,9 | 1,02 | 8,4 | 2,58 | 46 |
| 31 | VF2/R152a/R143a (2/67/31) | 79,1 | 1,15 | 8,3 | 2,53 | 42 |
| 32 | VF2/R152a/R143a (3,5/66,5/30) | 80,6 | 1,19 | 8,4 | 2,50 | 41 |
| 33 | VF2/R152a/R143a (4/71/25) | 81,8 | 1,15 | 8,6 | 2,50 | 42 |

| | | | | | | |
|---|---|---|---|---|---|---|
| * = Exemples comparatifs | | | | | | |

### Exemple 2

On a stocké à 90 °C dans différents bonbonnes en inox de 300 ml, un mélange d'un réfrigérant VF2/R-134a (10/90 % poids) avec une huile de type polyester, commercialisée sous la marque TRITON® SEZ 32 par DEA Mineralöl AG, et de l'eau. Certaines bonbonnes contenaient en outre un échantillon d'un tamis moléculaire (UOP XH9) ou une éprouvette de cuivre ou d'acier ordinaire. Les bonbonnes ont été conservées dans ces conditions durant environ un mois. Aucune dégradation chimique du réfrigérant, aucune polymérisation du VF2, ni aucune corrosion des éprouvettes métalliques n'ont été observées.

### Exemple 3

On a testé, selon la norme ISO 917, un réfrigérant VF2/R-134a (5/95 % poids) dans une machine frigorifique équipée d'un compresseur de type ouvert dont le volume balayé est de 19,6 m³/h, d'un condenseur refroidi à l'eau et d'un évaporateur en contact avec de l'air. Les performances de ce réfrigérant ont été comparées à celles du R-22 dans un cycle frigorifique standard. A une température moyenne d'évaporation de - 35,8°C, on a obtenu avec le réfrigérant selon l'invention, par rapport au R-22, une température en fin de compression 27,9 °C inférieure, un rapport de compression 9 % plus élevé et un COP électrique 13 % moins élevé.

### Exemple 4

La composition de l'azéotrope entre le VF2 et le R-23 a été estimée en mesurant la composition à l'équilibre de la phase liquide (X) et de la phase vapeur (Y) de différents mélanges de VF2 et de R-23, maintenus à température constante. La pression à l'équilibre a également été mesurée. Les résultats obtenus sont rassemblés au tableau II.

Alors qu'aux faibles teneurs en R-23, la fraction molaire de R-23 dans la phase gazeuse est supérieure à la fraction molaire de R-23 dans la phase liquide, l'inverse est observé aux fortes teneurs en R-23, démontrant l'existence d'un azéotrope entre le R-23 et le VF2.
Sur base de ces résultats expérimentaux, on a estimé, au moyen de l'équation d'état de Soave-Redlich-Kwong et des paramètres Uniquac des constituants du mélange, que la composition constituée de 58 % molaire de R-23 et de 42 % molaire de VF2 est azéotropique à une pression de 15,1 bar et que cette composition azéotropique possède un point d'ébullition de - 19.5 °C. A la pression de 15,1 bar, les compositions constituées essentiellement de 30 à 90 % molaire de R-23 et de 70 à 10 % molaire de VF2 possèdent un point d'ébullition de -19 ± 0,5 °C.

**Tableau II**

| Température (°C) | Pression (bar) | X_{R-23} (fr. molaire) | Y_{R-23} (fr. molaire) |
|---|---|---|---|
| -15,1 | 15,5 | 0,067 | 0,085 |
| -17,4 | 14,7 | 0,120 | 0,148 |
| -16,4 | 15,8 | 0,279 | 0,314 |
| -18,2 | 16,0 | 0,381 | 0,414 |
| -18,2 | 15,7 | 0,596 | 0,602 |
| -18,0 | 15,9 | 0,720 | 0,711 |
| -18,2 | 15,1 | 0,795 | 0,781 |
| -18,2 | 15,4 | 0,883 | 0,868 |

### Exemple 5

De manière analogue à l'exemple 1, une analyse des performances thermodynamiques de plusieurs réfrigérants selon l'invention de type très basse température a été réalisée. A titre de comparaison avec des réfrigérants connus, on a réalisé cette même analyse pour le R-13, le R-13B1 et le R-503 (mélange de R-13 et de R-23 en proportions pondérales 59,9/40,1).

Les paramètres du cycle frigorifique sont caractéristiques des systèmes très basse température. Les paramètres maintenus constants sont une surchauffe fixée à 10 K (différence de température de 10 °C), un sous-refroidissement fixé à 5 K (différence de température de 5 °C) et un rendement isentropique du compresseur fixé à 0,8. Les températures de début d'évaporation et de fin de condensation qui ont été imposées sont reprises au tableau m.

Ont été estimés la température en fin de compression (Tₘₐₓ), la pression dans l'évaporateur (Pₑᵥ), le rapport de compression (R = pression au condenseur/pression à l'évaporateur), le coefficient de performance mécanique (COP). la capacité frigorifique volumétrique (qᵥ) et le volume frigorifique de 10 kW.

Les résultats sont rassemblés au tableau III.

Il ressort du tableau III que les conditions d'utilisation des réfrigérants selon l'invention de type très basse température apparaissent suffisamment proches de celles du R-13, du R-13B1 ou du R-503 pour permettre leur utilisation dans des compresseurs utilisant actuellement ces réfrigérants.

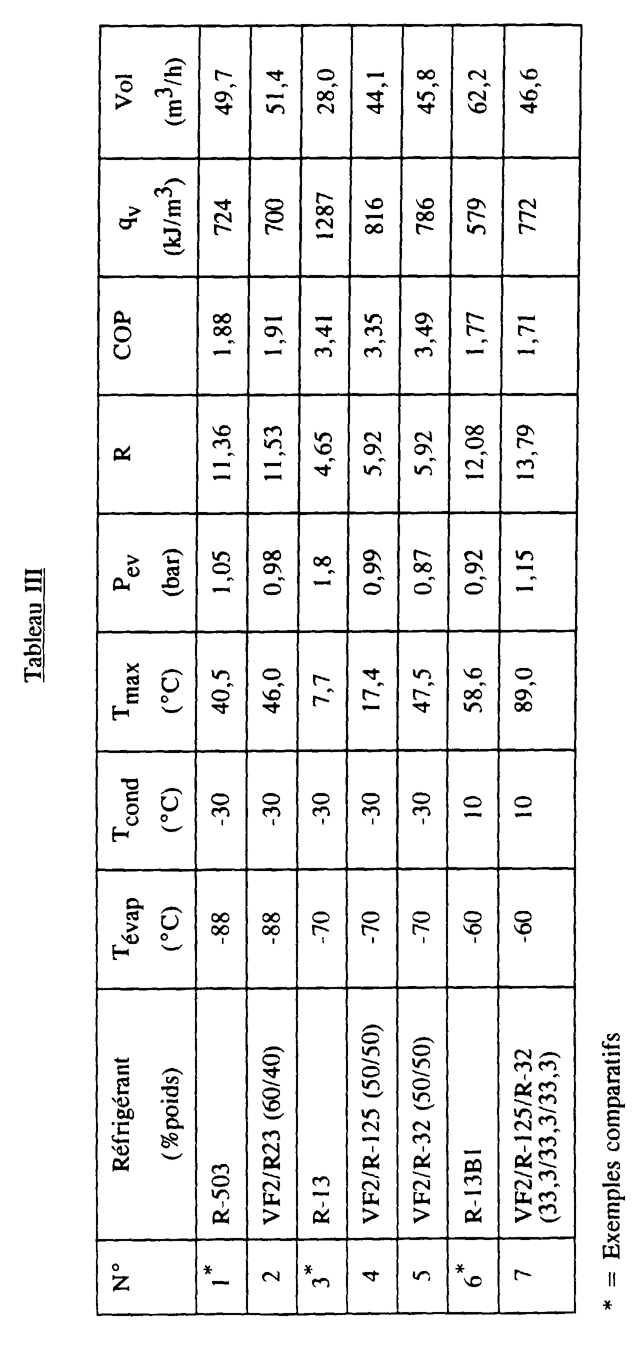

## Revendications

1. Réfrigérant constitué de 1,1-difluoroéthylène et d'au moins un hydrofluoroalcane de formule CₐH_{b}F_{c}, avec a un nombre entier égal à 1 ou 2, b un nombre entier de 1 à 4 et c un nombre entier de 2 à 5, la somme de b et c étant égale à 2a + 2.

2. Réfrigérant selon la revendication 1, dans lequel l'hydrofluoroalcane est sélectionné parmi le difluorométhane, le trifluorométhane, le 1,1-difluoroéthane, le 1,1,1-trifluoroéthane, le 1,1,1,2-tétrafluoroéthane, le pentafluoroéthane et leurs mélanges.

3. Réfrigérant selon la revendication 2, dans lequel l'hydrofluoroalcane est sélectionné parmi le difluorométhane, le 1,1-difluoroéthane, le 1,1,1-trifluoroéthane, le 1,1,1,2-tétrafluoroéthane, le pentafluoroéthane et leurs mélanges.

4. Réfrigérant selon la revendication 3, essentiellement constitué
(a) de 1,1-difluoroéthylène;
(b) de 1,1,1,2-tétrafluoroéthane et/ou de pentafluoroéthane; et, éventuellement,
(c) de difluorométhane et/ou de 1,1,1-trifluoroéthane et/ou de 1,1-difluoroéthane.

5. Réfrigérant selon la revendication 4, contenant du 1,1,1,2-tétrafluoroéthane.

6. Réfrigérant selon la revendication 4 ou 5, contenant du difluorométhane.

7. Réfrigérant selon la revendication 3, essentiellement constitué
(a) de 1,1-difluoroéthylène;
(b) de 1,1-difluoroéthane; et
(c) de difluorométhane et/ou de 1,1,1-trifluoroéthane.

8. Réfrigérant selon l'une quelconque des revendications 3 à 7, comprenant de 65 à 99 % en poids d'hydrofluoroalcane et de 1 à 35 % en poids de 1,1-difluoroéthylène.

9. Réfrigérant selon la revendication 2, dans lequel l'hydrofluoroalcane est sélectionné parmi le difluorométhane, le trifluorométhane, le 1,1,1 -trifluoroéthane, le pentafluoroéthane et leurs mélanges.

10. Réfrigérant selon la revendication 9, essentiellement constitué
(a) de 1,1-difluoroéthylène; et
(b) de difluorométhane et/ou de 1,1,1-trifluoroéthane et/ou de pentafluoroéthane.

11. Réfrigérant selon la revendication 9, essentiellement constitué
(a) de 1,1-difluoroéthylène;
(b) de trifluorométhane; et, éventuellement,
(c) de difluorométhane et/ou de 1,1,1-trifluoroéthane et/ou de pentafluoroéthane.

12. Réfrigérant selon la revendication 11, essentiellement constitué de 1,1-difluoroéthylène et de trifluorométhane.

13. Réfrigérant selon la revendication 11 ou 12, contenant le 1,1-difluoroéthylène et le trifluorométhane en proportions dans lesquelles ils forment un azéotrope ou un pseudo-azéotrope.

14. Réfrigérant selon l'une quelconque des revendications 9 à 13, comprenant de 10 à 95 % en poids d'hydrofluoroalcane(s) et de 5 à 90 % en poids de 1,1-difluoroéthylène.

15. Composition réfrigérante comprenant un réfrigérant selon l'une quelconque des revendications 1 à 14, au moins un additif et/ou au moins au un autre composé réfrigérant.

16. Composition réfrigérante selon la revendication 15, caractérisée en ce qu'elle contient de 0,1 à 50 % en poids d'additif.

17. Utilisation d'un réfrigérant selon l'une quelconque des revendications 1 à 14 ou d'une composition réfrigérante selon la revendication 15 ou 16 dans un équipement de transfert de chaleur par compression.

## Patentansprüche

1. Kältemittel aufgebaut aus 1,1-Difluorethylen und mindestens einem Hydrofluoralkan oder Fluorkohlenwasserstoff der Formel CₐH_{b}F_{c}, wobei
a eine ganze Zahl von 1 oder 2 ist,
b eine ganze Zahl von 1 bis 4 ist und
c eine ganze Zahl von 2 bis 5 ist, wobei die Summe von b und c gleich 2a plus 2 ist.

2. Kältemittel nach Anspruch 1, worin das Hydrofluoralkan ausgewählt ist aus Difluormethan, Trifluormethan, 1,1-Difluorethan, 1,1,1-Trifluorethan, 1,1,1,2-Tetrafluorethan, Pentafluorethan und deren Mischungen.

3. Kältemittel nach Anspruch 2, worin das Hydofluoralkan ausgewählt ist aus Difluormethan, 1,1-Difluorethan, 1,1,1-Trifluorethan, 1,1,1,2-Tetrafluorethan, Pentafluorethan und deren Mischungen.

4. Kältemittel nach Anspruch 3, im wesentlichen aufgebaut aus
(a) 1,1-Difluorethylen;
(b) 1,1,1,2-Tetrafluorethan und/oder Pentafluorethan und gegebenenfalls
(c) Difluormethan und /oder 1,1,1-Trifluorethan und/oder 1,1-Difluorethan

5. Kältemittel nach Anspruch 4 enthaltend 1,1,1,2-Tetrafluorethan.

6. Kältemittel nach Anspruch 4 oder 5, enthaltend Difluormethan.

7. Kältemittel nach Anspruch 3, im wesentlichen aufgebaut aus
(a) 1,1-Difluorethylen;
(b) 1,1-Difluorethan und
(c) Difluormethan und/oder 1,1,1-Trifluorethan.

8. Kältemittel nach einem der Ansprüche 3 bis 7, umfassend 65 bis 99 Gew.-% Hydrofluoralkan und 1 bis 35 Gew.-% 1,1-Difluorethylen.

9. Kältemittel nach Anspruch 2, worin das Hydrofluoralkan ausgewählt ist aus Difluormethan, Trifluormethan, 1,1,1-Trifluorethan Petafluorethan und deren Mischungen.

10. Kältemittel nach Anspruch 9, im wesentlichen aufgebaut aus
(a) 1,1-Difluorethylen und
(b) Difluormethan und/oder 1,1,1-Trifluorethan und/oder Pentafluorethan.

11. Kältemittel nach Anspruch 9, im wesentlichen aufgebaut aus
(a) 1,1-Difluorethylen;
(b) Trifluormethan und gegebenenfalls
(c) Difluormethan und/oder 1,1,1-Trifluorethan und/oder Pentafluorethan.

12. Kältemittel nach Anspruch 11, im wesentlichen aufgebaut aus 1,1-Difluorethylen und Trifluormethan.

13. Kältemittel nach Anspruch 11 oder 12, enthaltend 1,1-Difluorethylen und Trifluormethan in Anteilen, in denen ein Azeotrop oder ein Pseudoazeotrop gebildet wird.

14. Kältemittel nach einem der Ansprüche 9 bis 13 umfassend 10 bis 95 Gew.-% Hydrofluoralkan(e) und 5 bis 90 Gew.-% 1,1-Difluorethylen.

15. Kühlzusammensetzung umfassend ein Kältemittel nach einem der Ansprüche 1 bis 14, mindestens ein Additiv und/oder mindestens eine andere Kälteverbindung.

16. Kühlzusammensetzung nach Anspruch 15, dadurch gekennzeichnet, daß sie 0,1 bis 50 Gew.-% eines Additivs enthält.

17. Verwendung eines Kältemittels nach einem der Ansprüche 1 bis 14 oder einer Kühlzusammensetzung nach Anspruch 15 oder Anspruch 16 in einer Einrichtung zum Wärmetranfer durch Kompression.

## Claims

1. Refrigerant consisting of 1,1-difluoroethylene and at least one hydrofluoroalkane of formula CₐH_{b}f_{c}, with a an integer equal to 1 or 2, b an integer from 1 to 4 and c an integer from 2 to 5, the sum ofb and c being equal to 2a + 2.

2. Refrigerant according to Claim 1, in which the hydrofluoroalkane is selected from difluoromethane, trifluoromethane, 1,1-difluoroethane, 1,1,1-trifluoroethane, 1,1,1,2-tetrafluoroethane, pentafluoroethane and mixtures thereof.

3. Refrigerant according to Claim 2, in which the hydrofluoroalkane is selected from difluoromethane, 1,1-difluoroethane, 1,1,1-trifluoroethane, 1,1,1,2-tetrafluoroethane, pentafluoroethane and mixtures thereof.

4. Refrigerant according to Claim 3, essentially consisting of
(a) 1,1-difluoroethylene;
(b) 1,1,1,2-tetrafluoroethane and/or pentafluoroethane; and optionally
(c) difluoromethane and/or 1,1,1-trifluoroethane and/or 1,1-difluoroethane.

5. Refrigerant according to Claim 4, containing 1,1,1,2-tetrafluoroethane.

6. Refrigerant according to Claim 4 or 5, containing difluoromethane.

7. Refrigerant according to Claim 3, essentially consisting of
(a) 1,1-difluoroethylene;
(b) 1,1-difluoroethane; and
(c) difluoromethane and/or 1,1,1-trifluoroethane.

8. Refrigerant according to one of Claims 3 to 7, comprising from 65 to 99% by weight of hydrofluoroalkane and from 1 to 35% by weight of 1,1-difluoroethylene.

9. Refrigerant according to Claim 2, in which the hydrofluoroalkane is selected from difluoromethane, trifluoromethane, 1,1,1-trifluoroethane, pentafluoroethane and mixtures thereof.

10. Refrigerant according to Claim 9, essentially consisting of
(a) 1,1-difluoroethylene; and
(b) difluoromethane and/or 1,1,1-trifluoroethane and/or pentafluoroethane.

11. Refrigerant according to Claim 9, essentially consisting of
(a) 1,1-difluoroethylene;
(b) trifluoromethane; and optionally
(c) difluoromethane and/or 1,1,1-trifluoroethane and/or pentafluoroethane.

12. Refrigerant according to Claim 11, essentially consisting of 1,1-difluoroethylene and trifluoromethane.

13. Refrigerant according to Claim 11 or 12, containing 1,1-difluoroethylene and trifluoromethane in proportions in which they form an azeotrope or a pseudo-azeotrope.

14. Refrigerant according to any one of Claims 9 to 13, comprising from 10 to 95% by weight of hydrofluoroalkane(s) and from 5 to 90% by weight of 1,1-difluoroethylene.

15. Refrigerant composition comprising a refrigerant according to any one of Claims 1 to 14 and at least one additive and/or at least one other refrigerant compound.

16. Refrigerant composition according to Claim 15, characterized in that it contains from 0.1 to 50% by weight of additive.

17. Use of a refrigerant according to any one of Claims 1 to 14, or of a refrigerant composition according to Claim 15 or 16, in heat transfer equipment operating using compression.
